# FASCICULE DE BREVET EUROPEEN

(11) **EP 3 234 479 B1**
(45) Date de publication et mention de la délivrance du brevet: **03.04.2019**
(21) Numéro de dépôt: 15817156.1
(22) Date de dépôt: 15.12.2015
(51) Int. Cl.: F24S 30/425

(54) **SYSTÈME DE MISE EN MOUVEMENT DE ROTATION D'UN ENSEMBLE DE RÉFLECTEURS D'UNE CENTRALE SOLAIRE A CONCENTRATION ET CENTRALE SOLAIRE A CONCENTRATION COMPRENANT UN TEL SYSTÈME**
SYSTEM ZUM DREHEN EINER ANORDNUNG VON REFLEKTOREN EINES KONZENTRIERTEN SOLARKRAFTWERKS UND KONZENTRIERTES SOLARKRAFTWERK MIT SOLCH EINEM SYSTEM
SYSTEM FOR ROTATING AN ASSEMBLY OF REFLECTORS OF A CONCENTRATED SOLAR POWER PLANT AND CONCENTRATED SOLAR POWER PLANT COMPRISING SUCH A SYSTEM

(30) Priorité: 15.12.2014 FR 1462420
(43) Date de publication de la demande: 25.10.2017
(73) Titulaire: Commissariat à l'Énergie Atomique et aux Énergies Alternatives, 75015 Paris (FR)
(72) Inventeur: BRU, Pierrik, 38200 Bordeaux (FR); VIDAL, Frédéric, 38230 Charvieu (FR)
(74) Mandataire: Novaimo
(86) Numéro de dépôt international: PCT/EP2015/079694
(87) Numéro de publication internationale: WO 2016/096789

(56) Documents cités:
- EP-A1- 1 791 184
- EP-A1- 2 639 526
- WO-A1-2011/055719
- WO-A1-2014/122391
- GB-A- 2 235 786
- KR-A- 20100 022 549

## Description

### Domaine technique de l'invention

L'invention concerne un système de mise en mouvement de rotation d'un ensemble de réflecteurs d'une centrale solaire à concentration, permettant de positionner les réflecteurs de cet ensemble de manière échelonnée le long d'une ligne s'étendant selon une direction longitudinale et d'assurer un montage à liaison pivot de chaque réflecteur de l'ensemble selon un axe de pivotement sensiblement orienté selon la direction longitudinale.

L'invention concerne également une centrale solaire à concentration comprenant d'une part un ensemble de réflecteurs échelonnés selon une ligne et réalisant une concentration de rayonnement solaire et d'autre part un tel système assurant la mise en mouvement de rotation de l'ensemble de réflecteurs.

Un domaine d'application particulièrement visé, bien que cela ne soit pas exclusif, concerne celui où les réflecteurs de l'ensemble qui sont destinés à être orientés par pivotement sont de type Fresnel ou de type cylindro-parabolique, notamment à foyer linéaire. Ces deux types de réflecteurs permettent d'assurer une concentration linéaire du rayonnement solaire incident. Cela n'exclut pas la possibilité de prévoir des réflecteurs assurant une concentration ponctuelle du rayonnement solaire incident, notamment de type à parabole à foyer mobile ou encore du type utilisé classiquement dans les systèmes à tour à récepteur central.

### État de la technique

De telles centrales solaires à concentration sont connues, notamment sous la dénomination « CSP » pour « Concentrated Solar Power » en terminologie anglo-saxonne. Elles peuvent être utilisées dans le cadre d'une unité de production d'énergie à partir de rayonnement solaire concentré.

L'articulation des réflecteurs permet de faire tourner les lignes de réflecteurs par rapport au sol autour d'au moins un axe, souvent horizontal et orienté Nord-Sud, afin de suivre la course du soleil tout au long de la journée.

La technologie solaire thermique à concentration consiste notamment à utiliser le rayonnement solaire pour chauffer un fluide caloporteur servant de source chaude dans un cycle thermodynamique. La concentration des rayons lumineux réfléchis permet d'atteindre des températures plus ou moins élevées et ainsi de bénéficier de rendements de conversion thermodynamiques plus ou moins importants. Les technologies développées se distinguent par leur méthode de concentration des rayons solaires, de transport et éventuellement de stockage de la chaleur (fluides caloporteurs) et de conversion thermodynamique (turbines à vapeur, turbines à gaz, moteurs Stirling). Il existe aussi des applications où la chaleur est directement utilisée pour alimenter un équipement industriel.

Classiquement, il est considéré qu'il existe quatre familles de centrales solaires à concentration variant en fonction de la nature du fonctionnement des réflecteurs : les réflecteurs peuvent être soit de type Fresnel ou de type cylindro-parabolique, notamment à foyer linéaire, pour assurer une concentration linéaire du rayonnement solaire incident, soit de type à parabole à foyer mobile ou encore du type utilisé classiquement dans les systèmes à tour à récepteur central, pour assurant une concentration ponctuelle du rayonnement solaire incident.

De manière générale, chaque réflecteur a pour fonction de réfléchir le rayonnement solaire incident sur le miroir, et d'orienter les rayonnements solaires ainsi réfléchis afin de les concentrer vers un récepteur. A titre d'exemple, dans le cas d'un réflecteur de type Fresnel, le flux solaire au niveau du récepteur est environ 50 fois supérieur au flux solaire incident sur le réflecteur. Chaque réflecteur comprend classiquement un miroir et une structure supportant ce miroir destinée à être articulée de sorte à suivre le soleil au cours de sa course pendant la journée.

Il existe des systèmes conférant une orientation selon deux axes de pivotement permettant aux réflecteurs de se positionner dans n'importe quelle direction au cours de la journée. L'invention ne vise pas de tels systèmes.

Il existe d'autres systèmes, correspondant au domaine technique visé par l'invention, conférant une liberté de pivotement des réflecteurs autour d'un axe unique de pivotement sensiblement orienté selon la direction suivant laquelle s'étend la ligne de réflecteurs. Il en résulte la formation d'une liaison pivot pour le montage à pivotement des réflecteurs. Ce type de système, dont la mise en oeuvre du pivotement est plus simple que dans le cas des systèmes à deux axes de pivotement, est notamment utilisé dans le cas où le nombre de réflecteurs est très élevé et où la ligne présente une grande longueur, typiquement plusieurs centaines de mètres. Dans la plupart des cas, un espace est ménagé entre deux réflecteurs adjacents afin de permettre l'implantation des moyens du montage à liaison pivot des structures qui supportent les miroirs des réflecteurs.

L'entrainement des réflecteurs autour de la liaison pivot ainsi obtenue, c'est-à-dire la mise en mouvement de pivotement via la transmission d'un couple moteur, est typiquement réalisé par les éléments d'articulation eux-mêmes. Les réflecteurs sont angulairement accouplés les uns aux autres via les éléments d'articulation et par des moyens directs d'accouplement à leurs extrémités. L'entrainement en rotation se pratique en passant d'un réflecteur à l'autre directement et de manière unitaire pour la ligne de réflecteurs complète. Généralement, l'actionneur se trouve au centre de la ligne pour effectuer la mise en rotation, permettant de limiter la torsion et d'exploiter au mieux la rigidité de la ligne.

La conception de la liaison pivot est complexe car elle impacte directement la mise en place, l'exploitation et la maintenance des réflecteurs. La liaison pivot de réflecteurs nécessite généralement un grand nombre d'opérations de montage et de réglages précis consistant à connecter les réflecteurs entre eux pour former la ligne, à régler leurs alignements relatifs afin qu'ils visent tous à l'endroit où est implanté le récepteur et à régler les conditions nominales de l'actionneur. La précision requise impose généralement un réglage des réflecteurs sur place car la valeur des angles est très faible en pratique. Il est en effet difficile d'obtenir des axes préréglés en usine en raison du cumul excessif de défauts sur la longueur de la ligne que cela implique. Le désaccouplement des réflecteurs entre eux peut être une intervention dangereuse car elle est souvent effectuée en plein milieu de la centrale solaire à concentration.

Le réglage d'une telle ligne de réflecteurs se pratique forcément de manière séquentielle en commençant par l'actionneur. Cela impose souvent un montage séquentiel des réflecteurs et des contraintes associées pour le chantier. Le réglage d'un réflecteur nécessite l'immobilisation des réflecteurs situé en amont sur la ligne avant de le fixer, ce qui peut s'avérer contraignant et délicat. De plus, en raison de l'accouplement des réflecteurs induit par la liaison pivot, l'intervention sur l'un des réflecteurs de la ligne impose l'arrêt de fonctionnement d'un tronçon de la ligne.

Pour le dimensionnement en torsion d'une ligne de réflecteurs, il a été constaté que les effort dus aux balourds se répartissent généralement de manière aléatoire et se compensent, ayant peu d'incidence sur la torsion. Les frottements sont quant à eux toujours dans le sens opposé à la rotation. Ainsi, le couple transmis via la liaison pivot et via les réflecteurs accouplés deux à deux augmente linéairement en s'approchant de l'actionneur. Les réflecteurs étant accouplés, le couple s'additionne le long de la ligne et le dernier réflecteur subit l'ensemble du couple de la ligne. Les réflecteurs sont donc dimensionnés au sujet de leur rigidité en torsion de sorte à présenter un angle de torsion acceptable en bout de ligne sous l'effet de ce couple mécanique très élevé. Les réflecteurs de la ligne sont souvent identiques même s'ils ne subissent pas les mêmes efforts et il en résulte la nécessité d'une conception en conséquence, rendant la solution moins flexible, plus complexe et onéreuse. Il en résulte aussi un besoin de concevoir des axes de pivotement très rigides en torsion afin de ne pas induire de torsion gênante pour les réflecteurs.

Les éléments conférant la liaison pivot ont pour contrainte supplémentaire d'absorber la dilatation de la ligne de réflecteurs, qui peut être de l'ordre de 20 cm pour une ligne ayant une longueur de 100 m environ. Ce déplacement est par exemple absorbé par les paliers et nécessite généralement une sur-longueur permettant aux axes de glisser au niveau des liaisons pivot. Cette contrainte impacte directement la surface au sol requise pour l'implantation de la centrale solaire à concentration et donc le coût du génie civil et du terrain.

Il existe des solutions qui permettent de transmettre le couple mécanique nécessaire à la mise en mouvement des réflecteurs tout en absorbant la dilatation thermique pour éviter de cumuler l'allongement de chaque réflecteur. Par exemple, la solution décrite dans le document EP-A1-2639526 A1 prévoit un maintien des réflecteurs par l'intermédiaire de lames souples qui permettent de transmettre la rotation avec une bonne rigidité tout en absorbant la dilatation longitudinale. Mais des problèmes de résonance des réflecteurs apparaissent à cause de l'élasticité du montage induite par la présence des lames souples aux extrémités des réflecteurs. Pour limiter ce phénomène, une solution consisterait à prévoir une lame souple à une seule extrémité de chaque réflecteur, mais il deviendrait nécessaire de prévoir un chevauchement des réflecteurs à l'image de tuiles sur un toit. Le montage obligatoirement séquentiel deviendrait complexe, de même que les opérations de maintenance.

Une autre solution décrite dans le document FR-A1-2992405 prévoit la présence d'un axe d'entrainement déporté distinct des éléments constitutifs de la liaison pivot. Cet arbre d'entrainement déporté est commun à une pluralité de lignes de réflecteurs photovoltaïques parallèles entre elles et est orienté perpendiculairement aux lignes de sorte à assurer lui-même l'entrainement simultané de plusieurs lignes. L'arbre d'entrainement n'a par contre aucune action au sein de chaque ligne. Il est connecté à chacune des lignes via une transmission de type réducteur afin que les lignes tournent de manière synchronisée. L'arbre est lui-même entrainé par une motorisation centrale qui agit donc sur l'ensemble des lignes. Au sein de chaque ligne prise individuellement, la transmission du mouvement de rotation se fait via des connexions entre les réflecteurs constitutifs de la ligne. Cette solution ne permet donc pas de répondre aux problématiques listées précédemment pour chaque ligne de réflecteurs.

Enfin, classiquement, lorsque le soleil se déplace d'un angle donné, les réflecteurs d'un champ solaire tournent normalement tous du même angle afin de repositionner les taches solaires au centre du récepteur. L'angle de mouvement des réflecteurs est égal à l'angle de déplacement du soleil dans le cas d'une centrale solaire où les réflecteurs sont de type cylindro-parabolique et où le récepteur est mobile. L'angle de mouvement des réflecteurs est par contre sensiblement égal à la moitié de l'angle de déplacement du soleil dans le cas d'une centrale solaire où les réflecteurs sont de type Fresnel et où le récepteur est fixe. Néanmoins, dans le deuxième cas, il est généralement nécessaire d'ajouter en plus des écarts sur les angles de consignes allant jusqu'à 0,5° entre le début et la fin de journée afin d'optimiser la position des taches solaires des différentes lignes sur le récepteur. La solution décrite dans le document FR-A1-2992405, qui implique un synchronisme de rotation des différentes lignes, ne peut donc que difficilement être appliquée au cas de réflecteurs de type Fresnel.

WO2014/122391 A1 et GB2235786 A divulguent aussi des systèmes adaptés à la mise en mouvement de rotation d'un ensemble de réflecteurs.

### Objet de l'invention

Le but de la présente invention est de proposer un système de mise en mouvement de rotation d'un ensemble de réflecteurs d'une centrale solaire à concentration qui remédie aux inconvénients listés ci-dessus. Notamment, un objet de l'invention est de fournir un tel système, qui soit simple et peu onéreux, augmentant les performances énergétiques de la centrale solaire à concentration utilisant le système, réduisant l'emprise au sol et permettant une installation et une maintenance aisée et efficace des réflecteurs.

Un autre objet de l'invention est de fournir un tel système, qui permette de s'affranchir de la nécessité d'interruption du fonctionnement d'une partie des lignes de la centrale solaire à concentration en cas de maintenance ou de démontage de réflecteurs.

Ces objets peuvent être atteints par l'intermédiaire d'un système destiné à la mise en mouvement de rotation d'un ensemble de réflecteurs d'une centrale solaire à concentration, le système comprenant :
- des éléments d'articulation configurés de sorte à positionner les réflecteurs dudit ensemble de manière échelonnée le long d'une ligne s'étendant selon une direction longitudinale et à assurer un montage à liaison pivot de chaque réflecteur dudit ensemble selon un axe de pivotement sensiblement orienté selon la direction longitudinale,
- un arbre d'entrainement déporté distinct des éléments d'articulation,
- un actionneur assurant la mise en rotation de l'arbre d'entrainement,
- une pluralité de mécanismes de transmission distincts des éléments d'articulation, chaque mécanisme de transmission étant accouplé mécaniquement à l'arbre d'entrainement et assurant la mise en mouvement d'au moins un réflecteur associé audit mécanisme de transmission, autour de l'axe de pivotement correspondant dudit au moins un réflecteur associé, par une transmission d'un couple moteur audit réflecteur associé par ledit mécanisme de transmission.

Le système comprend aussi un dispositif de réglage apte au réglage angulaire du positionnement d'un réflecteur choisi par rapport au reste du système. Ce réglage peut être relativement à l'arbre d'entrainement. Ce dispositif de réglage peut être associé au mécanisme de transmission.

Selon un mode de réalisation particulier, les éléments d'articulation et les mécanismes de transmission sont configurés de sorte que chaque mécanisme de transmission transmet le couple moteur au réflecteur associé d'une manière directe dans laquelle aucune fraction dudit couple moteur ne transite par aucun autre réflecteur dudit ensemble.

De préférence, l'arbre d'entrainement déporté est parallèle à l'axe de pivotement des réflecteurs.

Selon un autre mode de réalisation particulier, chaque réflecteur dudit ensemble est accouplé mécaniquement à un seul mécanisme de transmission auquel il est associé.

Préférentiellement, les mécanismes de transmission sont configurés de sorte d'une part que la rotation imposée à l'arbre d'entrainement déporté par l'actionneur provoque la mise en mouvement de chaque mécanisme de transmission de la pluralité, d'autre part qu'au niveau de chaque mécanisme de transmission, le mouvement de ce mécanisme de transmission assure la mise en rotation, uniquement sous l'action de ce mécanisme de transmission, dudit au moins un réflecteur associé à ce mécanisme de transmission autour de l'axe de pivotement correspondant, de sorte à assurer des mises en rotation individuelles des réflecteurs indépendantes les unes des autres et uniquement sous les actions respectives des mécanismes de transmission de la pluralité.

Les mécanismes de transmission de ladite pluralité peuvent être échelonnés sur la longueur de l'arbre d'entrainement déporté et pour toute paire de mécanismes de transmission choisie parmi la pluralité, les deux mécanismes de transmission de ladite paire peuvent être associés à des réflecteurs distincts l'un de l'autre appartenant audit ensemble.

Selon un autre mode de réalisation particulier, l'actionneur est implanté sensiblement au milieu de la longueur de l'arbre d'entrainement déporté.

Au niveau de chaque réflecteur de l'ensemble, le système peut comprendre une bride de connexion montée à pivotement autour de l'axe de pivotement correspondant audit réflecteur et comprenant des éléments d'appui permettant d'accueillir ledit réflecteur de manière amovible, et chaque bride de connexion peut être accouplée mécaniquement à l'un, notamment à l'un unique, des mécanismes de transmission de ladite pluralité pour assurer l'application directe à la bride de connexion, par le mécanisme de transmission auquel elle est accouplée mécaniquement, du couple moteur provoquant la rotation du réflecteur accueilli par la bride de connexion.

Chaque mécanisme de transmission peut comprendre un dispositif de réglage assurant que la position angulaire occupée par la bride de connexion associée audit mécanisme de transmission est réglable par rapport à la position angulaire de l'arbre d'entrainement déporté.

Selon un mode de réalisation particulier, chaque mécanisme de transmission comprend un réducteur assurant une réduction entre la vitesse angulaire de l'arbre d'entrainement déporté et la vitesse angulaire du réflecteur associé audit mécanisme de transmission autour de l'axe de pivotement et les réducteurs de tous les mécanismes de transmission de ladite pluralité sont identiques.

Préférentiellement, les éléments d'articulation sont configurés de sorte que deux réflecteurs adjacents au sein de la ligne présentent une indépendance angulaire l'un par rapport à l'autre dans leurs mouvements de rotation respectifs autour de leurs axes de pivotement correspondants.

Une centrale solaire à concentration pourra comprendre un ensemble de réflecteurs échelonnés selon une ligne et réalisant une concentration de rayonnement solaire et un tel système assurant la mise en mouvement de rotation dudit ensemble de réflecteurs.

En particulier, les réflecteurs dudit ensemble sont de préférence de type Fresnel ou de type cylindro-parabolique, assurant une concentration linéaire du rayonnement solaire incident.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue schématique de principe, en vue de côté, d'un exemple d'une ligne de réflecteur de la centrale solaire à concentration comprenant un exemple de système selon l'invention,
- les figures 2 et 3 sont des vues schématiques de principe, en vue de face, de la centrale au niveau de l'un des réflecteurs, respectivement pour deux positions angulaires différentes imposées par le mécanisme de transmission,
- la figure 4 est une vue schématique de principe, toujours en vue de face, de l'opération de réglage de l'alignement des brides de connexion,
- et la figure 5 est une vue schématique, en vue de côté, de la ligne de réflecteur de la centrale solaire à concentration de la figure 1 en cas de démontage de l'un des réflecteurs.

### Description de modes préférentiels de l'invention

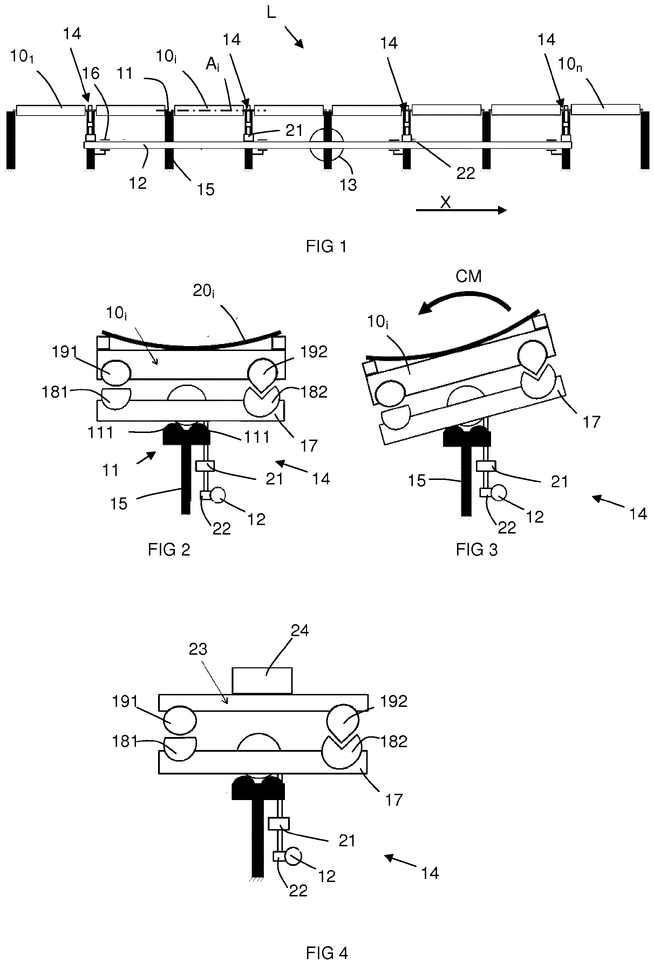

L'invention qui va être décrite maintenant, en référence aux figures 1 à 5 annexées, concerne de manière générale un système destiné à assurer la mise en mouvement de rotation d'un ensemble de réflecteurs 10ᵢ d'une centrale solaire à concentration.

L'invention porte aussi sur une centrale solaire à concentration comprenant d'une part un ensemble de réflecteurs 10ᵢ échelonnés selon une ligne L s'étendant selon une direction longitudinale X et réalisant une concentration de rayonnement solaire et d'autre part un tel système assurant la mise en mouvement de rotation de cet ensemble de réflecteurs 10ᵢ. La centrale solaire peut comprendre un récepteur (non représenté) destiné à être implanté dans la zone de concentration des rayons lumineux réfléchis sur les réflecteurs 10ᵢ. Le récepteur peut être de type mobile, notamment dans le cas d'une centrale solaire où les réflecteurs 10ᵢ sont de type cylindro-parabolique. A l'inverse, le récepteur peut être fixe, notamment dans le cas d'une centrale solaire où les réflecteurs 10ᵢ sont de type Fresnel.

Principalement, et comme il le sera détaillé plus loin, le système comprend :
- des éléments d'articulation 11 configurés de sorte à positionner les réflecteurs 10ᵢ de cet ensemble d'une manière échelonnée le long d'une ligne L s'étendant selon une direction longitudinale X (schématisée sur la figure 1) et à assurer un montage à liaison pivot de chaque réflecteur 10ᵢ de cet ensemble selon un axe de pivotement Aᵢ sensiblement orienté selon la direction longitudinale X,
- un arbre d'entrainement 12 déporté distinct des éléments d'articulation 11,
- un actionneur 13 assurant la mise en rotation de l'arbre d'entrainement 12,
- et-une pluralité de mécanismes de transmission 14 distincts des éléments d'articulation 11, et
- un dispositif de réglage 21 apte au réglage angulaire du positionnement d'un réflecteur choisi par rapport au reste du système.

Chaque mécanisme de transmission 14 est accouplé mécaniquement à l'arbre d'entrainement 12 et assure la mise en mouvement d'au moins un réflecteur 10ᵢ associé à ce mécanisme de transmission 14, autour de l'axe de pivotement Aᵢ correspondant dudit au moins un réflecteur 10ᵢ associé, par une transmission d'un couple moteur CM (représenté schématiquement sur la figure 3) audit réflecteur 10ᵢ associé par ce mécanisme de transmission 14.

L'indice i varie entre 1 et n où n est le nombre total de réflecteurs que comprend l'ensemble de réflecteurs. Autrement dit, la ligne L de réflecteurs comprend n réflecteurs disposés en ligne. Le réflecteur 10ᵢ correspond au premier réflecteur de la ligne L et le réflecteur 10ₙ est le dernier réflecteur de la ligne L.

Il s'agit notamment d'axes de pivotement Aᵢ où chacun est horizontal et généralement orienté selon un axe Nord-Sud dans le référentiel terrestre, afin de suivre la course du soleil tout au long de la journée. Les axes de pivotement Aᵢ des différents réflecteurs 10ᵢ sont de préférence alignés les uns avec les autres, c'est-à-dire organisés dans le prolongement l'un de l'autre. Ainsi, préférentiellement, les axes de pivotement sont sensiblement orientés parallèlement à la direction X selon laquelle la ligne L de réflecteurs s'étend. L'arbre d'entrainement déporté 12 est préférentiellement parallèle à l'axe de pivotement Aᵢ des réflecteurs 10ᵢ. Autrement dit, l'arbre d'entrainement déporté 12 est alors sensiblement orienté selon la direction longitudinale X.

Dans ce document, par « sensiblement orienté », il est de préférence entendu « exactement orienté » ou « orienté à plus ou moins 10° ».

L'arbre d'entrainement déporté qui peut être composé de plusieurs éléments connectés 12 est de préférence commun à tous les réflecteurs 10ᵢ de l'ensemble et à tous les mécanismes de transmission 14 de la pluralité. Par « déporté », il est entendu que l'axe de rotation de l'arbre 12 est distinct et décalé par rapport aux axes de pivotement Aᵢ. Eventuellement, au contraire de la variante représentée, la distance séparant l'arbre d'entrainement déporté 12 et chaque axe de pivotement Aᵢ pourrait éventuellement varier d'un réflecteur 10ᵢ à l'autre le long de la ligne L.

Il va de soi que la centrale solaire à concentration peut comprendre une pluralité de tels ensembles de réflecteurs 10ᵢ dans lesquels les réflecteurs de chaque ensemble sont organisés entre eux selon une ligne L respective. Ainsi, la centrale solaire à concentration peut comprendre une pluralité de lignes L de réflecteurs 10¡, notamment orientées parallèlement entre elles. Un système de mise en mouvement de rotation peut être associé de préférence à chaque ligne L de réflecteurs 10ᵢ, afin d'assurer la mise en mouvement des réflecteurs 10ᵢ individuellement d'une ligne à l'autre.

Par « ligne », on entend une organisation alignée des réflecteurs 10ᵢ entre eux, en enfilade les uns à la suite des autres, à la manière d'une rangée. Il peut s'agir d'une ligne droite ou potentiellement légèrement courbe le long de sa longueur ou en fonction du profil du terrain sur lequel la centrale solaire est implantée.

Par « réflecteur », on entend un réflecteur de lumière ayant comme fonction de réfléchir le rayonnement solaire incident sur ce réflecteur, et d'orienter les rayonnements solaires ainsi réfléchis afin de les concentrer. Chaque réflecteur 10ᵢ peut notamment comprendre un miroir 20ᵢ ayant une forme adaptée à la fonction de concentration recherchée.

Contrairement à l'art antérieur présenté ci-avant où les réflecteurs d'une même ligne sont entrainés en synchronisme entre eux et d'une manière identique pour chaque réflecteur, la solution présentée ici permet une gestion individuelle de l'entrainement de chaque réflecteur, assurée indépendamment par chaque mécanisme de transmission 14.

Les principes généraux de cette solution permettent une limitation très avantageuse des couples mécaniques supportés par les différents éléments du système et de la centrale solaire à concentration. La pose et l'enlèvement des réflecteurs 10ᵢ peut se pratiquer de façon simple et rapide sans déréglage angulaire du réflecteur déposé et des autres réflecteurs de la ligne. Le réglage de l'alignement angulaire de chaque réflecteur 10ᵢ peut être réalisé avant ou après la pose des réflecteurs.

Un autre avantage de cette solution est que les réflecteurs 10ᵢ, au contraire des solutions précédemment présentées, ne sont pas reliés ou accouplés les uns aux autres et qu'elle permet de les entrainer indépendamment les uns des autres par le biais d'un seul et même actionneur, ce qui permet de réduire la rigidité et donc les poids de l'ensemble des composants du système et de la centrale solaire à concentration.

Un autre avantage, par rapport aux solutions de l'art antérieur présentées ci-avant, est de permettre un allègement de la structure initiale de chaque réflecteur 10ᵢ, en raison de l'absence de couple mécanique à transmettre via les réflecteurs eux-mêmes.

Les éléments d'articulation 11 assurent essentiellement un montage individuel à liaison pivot de chaque réflecteur 10ᵢ de cet ensemble selon un axe de pivotement Aᵢ respectif. Les éléments d'articulation 11 sont de préférence configurés de sorte que deux réflecteurs 10ᵢ adjacents au sein de la ligne L présentent une indépendance angulaire l'un par rapport à l'autre dans leurs mouvements de rotation respectifs autour de leurs axes de pivotement Aᵢ correspondants. Autrement dit, les éléments d'articulation 11 peuvent être indépendants au niveau de chaque réflecteur 10ᵢ. Les éléments d'articulation 11 associés à l'un des réflecteurs 10ᵢ peuvent être totalement dissociés des éléments d'articulation 11 associés à chacun des réflecteurs 10ᵢ qui lui sont directement adjacents au sein de la ligne L.

Les éléments d'articulation 11 peuvent être de toute nature adaptée à la fonction recherchée. Il peut par exemple s'agir d'un montage utilisant une roue dentée liée au réflecteur et roulant en étant engrenée dans une crémaillère fixe, impliquant que la ligne L de réflecteurs se déplace latéralement au fur et à mesure de la rotation, perpendiculairement à la direction X. Une autre solution possible peut prévoir l'utilisation d'un principe de paliers où l'arbre de pivotement des réflecteurs peut être porté par des trous cylindriques ajustés en diamètre, avec la possibilité de prévoir un coussinet logé dans chaque trou afin de réduire les frottements mécaniques. Dans la variante illustrée, il est possible de prévoir que l'arbre de rotation de la structure qui supporte le miroir 20ᵢ du réflecteur repose sur deux galets 111, impliquant la présence de deux points de contact distincts.

Les éléments d'articulation 11 sont portés au sommet d'une pluralité de poteaux 15 échelonnés le long de la ligne L, notamment implantés aux extrémités des réflecteurs vues selon la direction X. Chaque poteau 15 repose par exemple au sol à son extrémité opposée. La liaison pivot de chaque réflecteur s'entend donc d'une liberté de mouvement par pivotement par rapport au sol, plus généralement par rapport à un référentiel terrestre.

L'arbre d'entrainement déporté 12 est lui-même monté à pivotement selon une liaison pivot selon un axe colinéaire à la direction X et parallèle aux axes de pivotement Aᵢ des réflecteurs 10ᵢ. Pour la mise en oeuvre de cette liaison pivot, tout ou partie des poteaux 15 peut porter des guides 16 assurant chacun le montage à pivotement d'une partie de la longueur de l'arbre d'entrainement déporté 12.

Dans l'exemple particulier qui est représenté sur les figures, chaque mécanisme de transmission 14 est associé à deux réflecteurs 10ᵢ. Autrement dit, chaque mécanisme de transmission 14 fournit un couple moteur CM à chacun des deux réflecteurs 10ᵢ qui lui sont associés, et uniquement à ces deux réflecteurs. Pour chaque réflecteur 10ᵢ, le couple moteur CM transmis par le mécanisme de transmission 14 auquel il est associé ne transite pas, même partiellement, par aucun autre réflecteur de la ligne L, que ce soit par l'autre réflecteur associé au même mécanisme 14 ou par tout autre réflecteur associé à tout autre mécanisme 14 du système.

Toutefois, il va de soi que le système peut prévoir qu'un seul et unique réflecteur 10ᵢ soit associé à chacun des mécanismes de transmission 14.

Il s'agit de mécanismes de transmission 14 individuels en ce sens qu'ils sont tous indépendants les uns des autres, dans leurs fonctionnements, leurs réglages ou dans la nature des couples moteurs CM qu'ils appliquent aux réflecteurs qui leurs sont respectivement associés. La nature des mécanismes de transmission 14 peut être quelconque dès lors qu'elle est adaptée à la fonction recherchée. La transmission de puissance depuis l'arbre d'entrainement déporté 12 et l'application du couple moteur CM de manière directe ou indirecte au réflecteur associé peut se faire par exemple par l'intermédiaire d'une courroie, d'une chaine ou équivalent, ou bien encore par l'intermédiaire d'un train de roues dentées.

L'actionneur 13 quant à lui peut être de toute nature adaptée à la fonction recherchée, comme par exemple un moteur électrique ou équivalent.

Contrairement à l'art antérieur où le mouvement de l'un des réflecteurs provoque la mise en mouvement du réflecteur adjacent le long de la ligne, ou autrement dit où pour chaque réflecteur, le couple moteur est transmis par, ou par le moins transite par, un réflecteur adjacent le long de la ligne, le système décrit ici comprend des éléments d'articulation 11 et des mécanismes de transmission 14 configurés de sorte que chaque mécanisme de transmission 14 transmet le couple moteur CM au réflecteur 10ᵢ associé d'une manière directe dans laquelle aucune fraction de ce couple moteur CM ne transite par aucun autre réflecteur 10ᵢ de l'ensemble.

Selon un mode de réalisation particulier, chaque réflecteur 10ᵢ de l'ensemble est accouplé mécaniquement à un seul mécanisme de transmission 14 auquel il est associé. Il en résulte une facilité de pilotage du couple moteur CM transmis individuellement à chacun des réflecteurs 10ᵢ.

Préférentiellement, les mécanismes de transmission 14 sont configurés de sorte que :
- la rotation imposée à l'arbre d'entrainement déporté 12 par l'actionneur 13 provoque la mise en mouvement de chaque mécanisme de transmission 14 de la pluralité,
- au niveau de chaque mécanisme de transmission 14, le mouvement de ce mécanisme de transmission assure la mise en rotation, uniquement sous l'action de ce mécanisme de transmission 14, dudit au moins un réflecteur 10ᵢ associé à ce mécanisme de transmission 14 autour de l'axe de pivotement Aᵢ correspondant, de sorte à assurer des mises en rotation individuelles des réflecteurs 10ᵢ indépendantes les unes des autres et uniquement sous les actions respectives des mécanismes de transmission 14 de la pluralité.

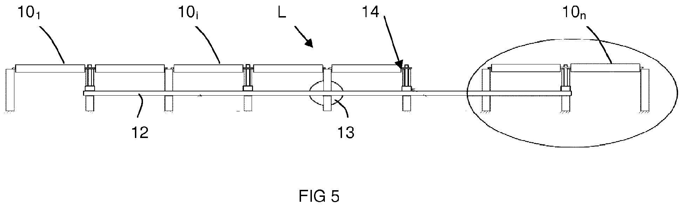

Comme cela est illustré sur les figures 1 et 5, les mécanismes de transmission 14 sont échelonnés sur la longueur de l'arbre d'entrainement déporté 12. Pour toute paire de mécanismes de transmission 14 choisie parmi la pluralité, les deux mécanismes de transmission 14 de cette paire sont associés à des réflecteurs 10ᵢ distincts l'un de l'autre appartenant au même ensemble.

Bien que cela ne soit pas limitatif, l'actionneur 13 est implanté sensiblement au milieu de la longueur de l'arbre d'entrainement déporté 12. Autrement dit, l'actionneur 13 est implanté sensiblement au centre de la ligne L. Cela permet une meilleure répartition de la puissance le long de l'arbre et une limitation des couples mécaniques transmis par l'intermédiaire de l'arbre 12.

Dans une variante préférée telle qu'illustrée, le système comprend au niveau de chaque réflecteur 10ᵢ de l'ensemble une bride de connexion 17 montée à pivotement autour de l'axe de pivotement Aᵢ correspondant audit réflecteur 10ᵢ. La bride de connexion 17 comprend des éléments d'appui 181, 182 permettant d'accueillir le réflecteur 10ᵢ de manière amovible. Chaque bride de connexion 17 est accouplée mécaniquement à l'un, notamment à l'un unique, des mécanismes de transmission 14 pour assurer l'application directe à la bride de connexion 17, par le mécanisme de transmission 14 auquel elle est accouplée mécaniquement, du couple moteur CM provoquant la rotation du réflecteur 10ᵢ accueilli par la bride de connexion 17.

Autrement dit, dans ce cas, c'est la bride de connexion 17 qui est montée à pivotement via les éléments d'articulation 11 et le couple moteur CM est transmis par le mécanisme de transmission 14 directement à la bride de connexion 17.

La figure 3 illustre l'application du couple moteur CM à la bride de connexion 17 qui a pour effet de modifier la position angulaire occupée par la bride de connexion 17 autour de l'axe de pivotement Aᵢ par rapport à celle occupée sur la figure 2 avant l'application de ce couple moteur CM. Par la liaison mécanique entre le réflecteur 10ᵢ et la bride de connexion 17, il en résulte une modification identique de la position angulaire du réflecteur 10ᵢ entre les figures 2 et 3.

Il reste toutefois envisageable éventuellement que chaque mécanisme de transmission 14 soit directement accouplé mécaniquement au réflecteur 10ᵢ lui-même, notamment en cas d'absence de la bride de connexion 17. Dans ce cas, le couple moteur CM est transmis directement au réflecteur 10ᵢ par le mécanisme de transmission 14 auquel il est associé. Dans ce même cas, un dispositif de réglage 21, qui sera décrit plus en détail ultérieurement, peut agir de même directement sur le réflecteur 10i, pour permettre son réglage angulaire, notamment par rapport à l'arbre 12, indépendamment des autres réflecteurs.

Chaque réflecteur 10ᵢ peut être équipé d'éléments d'appui complémentaires 191, 192 destinés à coopérer avec les éléments d'appui 181, 182 au moment où le réflecteur 10ᵢ est porté par la bride de connexion 17, d'une manière assurant son maintien en position même dans le cas d'une inclinaison de la bride de connexion 17, comme cela est illustré sur la figure 3 par exemple. Ces éléments d'appui 191, 192 peuvent notamment équiper une structure appartenant au réflecteur 10ᵢ et supportant le miroir 20ᵢ correspondant. Cette structure est donc destinée à reposer sur la bride de connexion 17.

La liaison mécanique entre les éléments d'appui 181, 182 portés par la bride de liaison 17 et les éléments d'appui 191, 192 portés par le réflecteurs 10ᵢ est facilement séparable et démontable. L'un des rôles des éléments d'appui 181, 182 est de servir de référence de positionnement pour maintenir et orienter les réflecteurs 10ᵢ dont les éléments d'appui 191, 192 sont correctement positionnés en usine pour former une référence par rapport aux positions des miroirs 20ᵢ qui viendront directement se poser sans réglage ultérieur. Généralement ce sont deux entités différentes qui d'une part fabriquent et posent les réflecteurs 10ᵢ et d'autre part réalisent le contrôle de la commande, de la motorisation et du réglage des alignements. Par conséquent, un avantage supplémentaire de la solution décrite dans ce document et de permettre de dissocier les opérations de pose et de réglage, facilitant d'autant la mise en oeuvre de ces opérations.

Selon un mode de réalisation particulier, chaque mécanisme de transmission 14 comprend un dispositif de réglage 21 assurant que la position angulaire occupée par la bride de connexion 17 associée à ce mécanisme de transmission 14 est réglable par rapport à la position angulaire de l'arbre d'entrainement déporté 12.

Autrement dit, dans ce mode de réalisation, il n'y a pas de bijection réciproque entre la valeur de la position angulaire occupée par la bride de connexion 17 et la valeur de la position angulaire de l'arbre d'entrainement déporté 12. Le dispositif de réglage 21 permet au contraire de pouvoir faire varier la position angulaire occupée par la bride de connexion 17 indépendamment de la position angulaire de l'arbre d'entrainement déporté 12, par exemple même si la position angulaire de l'arbre d'entrainement déporté 12 ne varie pas. Le réglage angulaire des brides peut toutefois se faire via un réglage des positions des éléments d'appuis 181 et 182. De manière plus générale, tout mode de réalisation peut comprendre un dispositif de réglage, permettant l'ajustement de la position angulaire d'un réflecteur choisi par rapport au reste du système. Ce dispositif de réglage peut être mis en oeuvre par tout mécanisme, par exemple à base d'une ou plusieurs vis de réglage. Il peut être associé au mécanisme de transmission ou indépendant.

Il en résulte une possibilité d'aligner les réflecteurs 10ᵢ de la ligne L indépendamment de l'arbre d'entrainement déporté 12. Cela permet notamment de pré-aligner les brides de connexion 17, notamment en l'absence des réflecteurs 10ᵢ lorsque les éléments d'appui 181, 182 ne supportent pas encore les éléments d'appui 191, 192 des réflecteurs. Le préréglage peut être réalisé sur l'ensemble des lignes sans avoir besoin de monter les réflecteurs, ce qui offre une très grande flexibilité pour le chantier.

Ainsi en référence à la figure 4, le préréglage de l'alignement de chaque réflecteur 10ᵢ peut notamment se pratiquer en l'absence du réflecteur 10ᵢ, c'est-à-dire avant sa pose et avant qu'il ne soit positionné sur les éléments d'appui 181, 182. Par contre, la bride de connexion 17 étant déjà présente, un outillage de réglage 23 est positionné sur la bride de connexion 17, plus précisément sur les éléments d'appui 181, 182, en lieu et place du réflecteur. Un niveau de précision 24 est ensuite disposé sur l'outillage de réglage 23, permettant alors la mise en oeuvre d'un réglage angulaire précis des brides de connexion 17.

La liaison décrite ci-dessus entre la bride de connexion 17 et le réflecteur 10ᵢ qu'elle porte permet avantageusement de monter et démonter individuellement chaque réflecteur de manière simple, rapide et sans influence pour les autres réflecteurs. Notamment, le système décrit précédemment permet de s'affranchir de l'obligation d'un arrêt de fonctionnement d'au moins une partie de la ligne L lors d'un changement de l'un des réflecteurs ou une opération de maintenance sur l'un des réflecteurs, et d'éviter le risque de dé-focalisation des réflecteurs durant les opérateurs en cours de maintenance.

La figure 5 montre la situation d'un démontage du réflecteur 10₍ₙ₋₂₎ : les réflecteurs situés en amont, c'est-à-dire les réflecteurs 10₍ₙ₋₁₎ et 10ₙ sont avantageusement encore fonctionnels et peuvent être utilisés. Cette possibilité s'applique pour tout réflecteur de la ligne L, indépendamment de son rang.

Selon un mode de réalisation particulier, chaque mécanisme de transmission 14 comprend un réducteur 22 assurant une réduction entre la vitesse angulaire de l'arbre d'entrainement déporté 12 et la vitesse angulaire du réflecteur 10ᵢ associé à ce mécanisme de transmission 14 autour de l'axe de pivotement Aᵢ. Les réducteurs 22 de tous les mécanismes de transmission 14 de la pluralité sont avantageusement identiques afin de simplifier la conception du système et abaisser le coût. De tels réducteurs 22 ont pour avantage de permettre, en fonction du rapport de réduction qu'ils délivrent, d'augmenter la précision de position angulaire des réflecteurs 10ᵢ autour des axes de pivotement Aᵢ.

Un domaine d'application particulièrement visé, bien que cela ne soit pas exclusif, concerne celui où les réflecteurs 10ᵢ de l'ensemble qui sont destinés à être orientés par pivotement sont de type Fresnel ou de type cylindro-parabolique, notamment à foyer linéaire, assurant tous deux une concentration linéaire du rayonnement solaire incident. Un réflecteur de type Fresnel est un miroir quasi plan, notamment présentant un rayon de courbure de 10 m à 40 m, et une distance focale de 5 à 20 m. Le récepteur associé est généralement fixe. Un réflecteur cylindro-parabolique est un miroir courbé, parabolique avec une distance focale comprise entre 0,2 m à 2 m. Le récepteur associé est généralement mobile, même s'il est possible qu'il soit fixe.

Cela n'exclut pas la possibilité de prévoir des réflecteurs 10ᵢ assurant une concentration ponctuelle du rayonnement solaire incident, notamment de type à parabole à foyer mobile ou encore du type utilisé classiquement dans les systèmes à tour à récepteur central.

Avantageusement, le système décrit précédemment permet également de s'affranchir de la nécessité d'un mécanisme de bridage mécanique dédié à la sécurité face aux vents violents, car l'actionneur 13 lui-même bloque en permanence l'ensemble des réflecteurs 10ᵢ via l'arbre d'entrainement déporté 12.

Les avantages du système et de la centrale solaire à concentration qui ont été décrits ci-dessus sont donc notamment également les suivants :
- il est possible de commencer le réglage des réflecteurs par n'importe lequel d'entre eux,
- l'arbre d'entrainement déporté permet d'envisager un réglage simplifié de l'alignement relatif des réflecteurs d'une même ligne, qui peut en outre être effectué avant la pose des réflecteurs,
- l'entrainement direct des réflecteurs par leurs extrémités permet de pouvoir alléger les réflecteurs et les rendre moins couteux, de réduire les contraintes de torsion et permet d'alléger l'ensemble des éléments de montage à liaison pivot,
- l'absence de transmission de mouvement et de couple mécanique par les axes de pivotement permet de réduire considérablement les dimensions de l'ensemble des axes de rotation des réflecteurs,
- le couple mécanique est quasi constant sur chaque réflecteur contrairement aux solutions de l'art antérieur où le couple est décroissant en s'éloignant de l'actionneur : le dimensionnement est plus homogène et la rigidité est mieux exploitée,
- la dilatation thermique est gérée au niveau de chaque réflecteur et n'est plus cumulée sur la longueur de la ligne,
- l'espace entre deux réflecteurs peut être grandement réduit, de même que l'emprise au sol de la centrale solaire,
- la meilleure compacité permet d'augmenter la densité de flux rayonné et d'augmenter le rendement thermique,
- il est possible de choisir des actionneurs capables de délivrer des couples de sortie plus faibles, les rendant moins onéreux,
- l'effet des jeux dans la transmission est réduit et il est donc possible de choisir des composants plus simples et moins chers,
- les opérations de montage, de réglage et de démontage sont simples et rapides, avec un gain de temps d'installation de la centrale solaire,
- et la maintenance est simplifiée en s'affranchissant de l'obligation d'arrêt de tronçons de ligne lors d'un changement ou de maintenance programmée sur un réflecteur.

## Revendications

1. Système destiné à la mise en mouvement de rotation d'un ensemble de réflecteurs (10ᵢ) d'une centrale solaire à concentration, le système comprenant :
- des éléments d'articulation (11) configurés de sorte à positionner les réflecteurs (10ᵢ) dudit ensemble de manière échelonnée le long d'une ligne (L) s'étendant selon une direction longitudinale (X) et à assurer un montage à liaison pivot de chaque réflecteur (10ᵢ) dudit ensemble selon un axe de pivotement (Aᵢ) sensiblement orienté selon la direction longitudinale (X),
- un arbre d'entrainement (12) déporté distinct des éléments d'articulation (11),
- un actionneur (13) assurant la mise en rotation de l'arbre d'entrainement (12),
- une pluralité de mécanismes de transmission (14) distincts des éléments d'articulation (11), chaque mécanisme de transmission (14) étant accouplé mécaniquement à l'arbre d'entrainement (12) et assurant la mise en mouvement d'au moins un réflecteur (10ᵢ) associé audit mécanisme de transmission (14), autour de l'axe de pivotement (Aᵢ) correspondant dudit au moins un réflecteur (10ᵢ) associé, par une transmission d'un couple moteur (CM) audit réflecteur (10ᵢ) associé par ledit mécanisme de transmission (14),
- un dispositif de réglage (21) apte au réglage angulaire du positionnement d'un réflecteur choisi par rapport au reste du système.

2. Système selon la revendication 1, **caractérisé en ce que** les éléments d'articulation (11) et les mécanismes de transmission (14) sont configurés de sorte que chaque mécanisme de transmission (14) transmet le couple moteur (CM) au réflecteur (10ᵢ) associé d'une manière directe dans laquelle aucune fraction dudit couple moteur (CM) ne transite par aucun autre réflecteur (10ᵢ) dudit ensemble.

3. Système selon l'une quelconque des revendications 1 ou 2, **caractérisé en ce que** l'arbre d'entrainement déporté (12) est parallèle à l'axe de pivotement (Aᵢ) des réflecteurs (10ᵢ).

4. Système selon l'une quelconque des revendications 1 à 3, **caractérisé en ce que** chaque réflecteur (10ᵢ) dudit ensemble est accouplé mécaniquement à un seul mécanisme de transmission (14) auquel il est associé.

5. Système selon l'une quelconque des revendications 1 à 4, **caractérisé en ce que** les mécanismes de transmission (14) sont configurés de sorte d'une part que la rotation imposée à l'arbre d'entrainement déporté (12) par l'actionneur (13) provoque la mise en mouvement de chaque mécanisme de transmission (14) de la pluralité, d'autre part qu'au niveau de chaque mécanisme de transmission (14), le mouvement de ce mécanisme de transmission assure la mise en rotation, uniquement sous l'action de ce mécanisme de transmission (14), dudit au moins un réflecteur (10ᵢ) associé à ce mécanisme de transmission (14) autour de l'axe de pivotement (Aᵢ) correspondant, de sorte à assurer des mises en rotation individuelles des réflecteurs (10ᵢ) indépendantes les unes des autres et uniquement sous les actions respectives des mécanismes de transmission (14) de la pluralité.

6. Système selon l'une quelconque des revendications 1 à 5, **caractérisé en ce que** les mécanismes de transmission (14) de ladite pluralité sont échelonnés sur la longueur de l'arbre d'entrainement déporté (12) et **en ce que** pour toute paire de mécanismes de transmission (14) choisie parmi la pluralité, les deux mécanismes de transmission (14) de ladite paire sont associés à des réflecteurs (10ᵢ) distincts l'un de l'autre appartenant audit ensemble.

7. Système selon l'une quelconque des revendications 1 à 6, **caractérisé en ce que** l'actionneur (13) est implanté sensiblement au milieu de la longueur de l'arbre d'entrainement déporté (12).

8. Système selon l'une quelconque des revendications 1 à 7, **caractérisé en ce qu'**au niveau de chaque réflecteur (10ᵢ) de l'ensemble, le système comprend une bride de connexion (17) montée à pivotement autour de l'axe de pivotement (Aᵢ) correspondant audit réflecteur (10ᵢ) et comprenant des éléments d'appui (181, 182) permettant d'accueillir ledit réflecteur (10ᵢ) de manière amovible, et **en ce que** chaque bride de connexion (17) est accouplée mécaniquement à l'un, notamment à l'un unique, des mécanismes de transmission (14) de ladite pluralité pour assurer l'application directe à la bride de connexion (17), par le mécanisme de transmission (14) auquel elle est accouplée mécaniquement, du couple moteur (CM) provoquant la rotation du réflecteur (10ᵢ) accueilli par la bride de connexion (17).

9. Système selon la revendication 8, **caractérisé en ce que** chaque mécanisme de transmission (14) comprend un dispositif de réglage (21) assurant que la position angulaire occupée par la bride de connexion (17) associée audit mécanisme de transmission (14) est réglable par rapport à la position angulaire de l'arbre d'entrainement déporté (12).

10. Système selon l'une quelconque des revendications 1 à 9, **caractérisé en ce que** chaque mécanisme de transmission (14) comprend un réducteur (22) assurant une réduction entre la vitesse angulaire de l'arbre d'entrainement déporté (12) et la vitesse angulaire du réflecteur (10ᵢ) associé audit mécanisme de transmission (14) autour de l'axe de pivotement (Aᵢ) et **en ce que** les réducteurs (22) de tous les mécanismes de transmission (14) de ladite pluralité sont identiques.

11. Système selon l'une quelconque des revendications 1 à 10, **caractérisé en ce que** les éléments d'articulation (11) sont configurés de sorte que deux réflecteurs (10ᵢ) adjacents au sein de la ligne (L) présentent une indépendance angulaire l'un par rapport à l'autre dans leurs mouvements de rotation respectifs autour de leurs axes de pivotement (Aᵢ) correspondants.

12. Centrale solaire à concentration comprenant un ensemble de réflecteurs (10ᵢ) échelonnés selon une ligne (L) et réalisant une concentration de rayonnement solaire et un système selon l'une quelconque des revendications 1 à 11 assurant la mise en mouvement de rotation dudit ensemble de réflecteurs (10ᵢ).

13. Centrale solaire à concentration selon la revendication 12, **caractérisée en ce que** les réflecteurs (10ᵢ) dudit ensemble sont de type Fresnel ou de type cylindro-parabolique, assurant une concentration linéaire du rayonnement solaire incident.

## Patentansprüche

1. System, das zum Drehen einer Anordnung von Reflektoren (10ᵢ) eines konzentrierten Solarkraftwerks bestimmt ist, wobei das System Folgendes beinhaltet:
- Gelenkelemente (11), die dazu ausgelegt sind, die Reflektoren (10ᵢ) der Anordnung abgestuft entlang einer Linie (L) zu positionieren, die sich entlang einer Längsrichtung (X) erstreckt, und eine Schwenkverbindungsmontage jedes Reflektors (10ᵢ) der Anordnung entlang einer Schwenkachse (Aᵢ) sicherzustellen, die im Wesentlichen entlang der Längsrichtung (X) ausgerichtet ist,
- eine verschobene Antriebswelle (12), die von den Gelenkelementen (11) getrennt ist,
- ein Stellglied (13), das das Drehen der Antriebswelle (12) sicherstellt,
- eine Vielzahl von Übertragungsmechanismen (14), die von den Gelenkelementen (11) getrennt sind, wobei jeder Übertragungsmechanismus (14) mechanisch mit der Antriebswelle (12) gekoppelt ist und durch eine Übertragung eines Motordrehmoments (CM) zum zugeordneten Reflektor (10ᵢ) mittels des Übertragungsmechanismus (14) das Bewegen mindestens eines dem Getriebemechanismus (14) zugeordneten Reflektors (10ᵢ) um die dem mindestens einen zugeordneten Reflektor (10ᵢ) entsprechende Schwenkachse (Aᵢ) sicherstellt,
- eine Steuervorrichtung (21), die zur Winkelsteuerung der Positionierung eines ausgewählten Reflektors relativ zum restlichen System fähig ist.

2. System nach Anspruch 1, **dadurch gekennzeichnet, dass** die Gelenkelemente (11) und die Übertragungsmechanismen (14) derart ausgelegt sind, dass jeder Übertragungsmechanismus (14) das Motordrehmoment (CM) direkt zum zugeordneten Reflektor (10ᵢ) überträgt, wobei kein Bruchteil des Motordrehmoments (CM) über einen anderen Reflektor (10ᵢ) der Anordnung geleitet wird.

3. System nach einem der Ansprüche 1 oder 2, **dadurch gekennzeichnet, dass** die verschobene Antriebswelle (12) parallel zur Schwenkachse (Aᵢ) der Reflektoren (10ᵢ) ist.

4. System nach einem der Ansprüche 1 bis 3, **dadurch gekennzeichnet, dass** jeder Reflektor (10ᵢ) der Anordnung mechanisch mit einem einzelnen Übertragungsmechanismus (14), dem er zugeordnet ist, gekoppelt ist.

5. System nach einem der Ansprüche 1 bis 4, **dadurch gekennzeichnet, dass** die Übertragungsmechanismen (14) derart ausgelegt sind, dass zum einen die der verschobenen Antriebswelle (12) vom Stellglied (13) auferlegte Drehung das Bewegen jedes Übertragungsmechanismus (14) der Vielzahl verursacht und dass zum anderen auf Höhe jedes Übertragungsmechanismus (14) die Bewegung dieses Übertragungsmechanismus allein durch Wirkung dieses Übertragungsmechanismus (14) das Drehen des mindestens einen diesem Übertragungsmechanismus (14) zugeordneten Reflektors (10ᵢ) um die entsprechende Schwenkachse (Aᵢ) sicherstellt, um ein individuelles Drehen der Reflektoren (10ᵢ) unabhängig voneinander und jeweils allein durch Wirkung des jeweiligen Übertragungsmechanismus (14) der Vielzahl sicherzustellen.

6. System nach einem der Ansprüche 1 bis 5, **dadurch gekennzeichnet, dass** die Übertragungsmechanismen (14) der Vielzahl über die Länge der verschobenen Antriebswelle (12) abgestuft sind und dass bei jedem Paar von Übertragungsmechanismen (14), das aus der Vielzahl ausgewählt wird, die zwei Übertragungsmechanismen (14) des Paares voneinander getrennten Reflektoren (10ᵢ) zugeordnet sind, die zu der Anordnung gehören.

7. System nach einem der Ansprüche 1 bis 6, **dadurch gekennzeichnet, dass** das Stellglied (13) im Wesentlichen in der Mitte der Länge der verschobenen Antriebswelle (12) eingebaut ist.

8. System nach einem der Ansprüche 1 bis 7, **dadurch gekennzeichnet, dass** das System auf Höhe jedes Reflektors (10ᵢ) der Anordnung einen Verbindungsflansch (17) beinhaltet, der um die dem Reflektor (10ᵢ) entsprechende Schwenkachse (Aᵢ) schwenkbar montiert ist und Stützelemente (181, 182) beinhaltet, die es ermöglichen, den Reflektor (10ᵢ) entfernbar aufzunehmen, und dass jeder Verbindungsflansch (17) mechanisch mit dem einen, insbesondere dem einen einzelnen, der Übertragungsmechanismen (14) der Vielzahl gekoppelt ist, um die direkte Ausübung des Motordrehmoments (CM) auf den Verbindungsflansch (17) durch den Übertragungsmechanismus (14), mit dem er mechanisch gekoppelt ist, sicherzustellen, was die Drehung des vom Verbindungsflansch (17) aufgenommenen Reflektors (10ᵢ) verursacht.

9. System nach Anspruch 8, **dadurch gekennzeichnet, dass** jeder Übertragungsmechanismus (14) eine Steuervorrichtung (21) beinhaltet, die sicherstellt, dass die von dem dem Übertragungsmechanismus (14) zugeordneten Verbindungsflansch (17) eingenommene Winkelposition relativ zur Winkelposition der verschobenen Antriebswelle (12) steuerbar ist.

10. System nach einem der Ansprüche 1 bis 9, **dadurch gekennzeichnet, dass** jeder Übertragungsmechanismus (14) ein Vorgelege (22) beinhaltet, das eine Verringerung zwischen der Winkelgeschwindigkeit der verschobenen Antriebswelle (12) und der Winkelgeschwindigkeit des dem Übertragungsmechanismus (14) zugeordneten Reflektors (10ᵢ) um die Schwenkachse (Aᵢ) sicherstellt, und dass die Vorgelege (22) aller Übertragungsmechanismen (14) der Vielzahl identisch sind.

11. System nach einem der Ansprüche 1 bis 10, **dadurch gekennzeichnet, dass** die Gelenkelemente (11) derart ausgelegt sind, dass zwei in der Linie (L) benachbarte Reflektoren (10ᵢ) in ihren jeweiligen Drehbewegungen um ihre entsprechenden Schwenkachsen (Aᵢ) eine winklige Unabhängigkeit voneinander aufweisen.

12. Konzentriertes Solarkraftwerk, das eine Anordnung von entlang einer Linie (L) abgestuften Reflektoren (10ᵢ) beinhaltet und eine Konzentration von Sonnenstrahlung durchführt, und System nach einem der Ansprüche 1 bis 11, das das Drehen der Anordnung von Reflektoren (10ᵢ) sicherstellt.

13. Konzentriertes Solarkraftwerk nach Anspruch 12, **dadurch gekennzeichnet, dass** die Reflektoren (10ᵢ) der Anordnung vom Typ Fresnel oder vom zylindrischparabolischen Typ sind, der eine lineare Konzentration der einfallenden Sonnenstrahlung sicherstellt.

## Claims

1. A system intended for rotating a set of reflectors (10ᵢ) of a concentrated solar power plant, the system comprising:
- articulation elements (11) configured so as to position the reflectors (10ᵢ) of said set in a manner that is staggered along a line (L) extending in a longitudinal direction (X) and to provide pivot-mounted connection of each reflector (10ᵢ) of said set about an axis of pivoting (Aᵢ) oriented substantially in the longitudinal direction (X),
- an offset drive shaft (12) distinct from the articulation elements (11),
- an actuator (13) that rotates the drive shaft (12),
- a plurality of transmission mechanisms (14) distinct from the articulation elements (11), each transmission mechanism (14) being mechanically coupled to the drive shaft (12) and providing the movement of at least one reflector (10ᵢ) associated with said transmission mechanism (14) about the corresponding axis of pivoting (Aᵢ) of said at least one associated reflector (10ᵢ) by the transmission of a drive torque (CM) to said associated reflector (10ᵢ) by said transmission mechanism (14),
- an adjusting device (21) able to angularly adjust the positioning of a reflector chosen in relation to the rest of the system.

2. The system as claimed in claim 1, **characterized in that** the articulation elements (11) and the transmission mechanisms (14) are configured in such a way that each transmission mechanism (14) transmits the drive torque (CM) to the associated reflector (10ᵢ) in a direct manner in which no fraction of said drive torque (CM) passes via any other reflector (10ᵢ) of said set.

3. The system as claimed in either one of claims 1 and 2, **characterized in that** the offset drive shaft (12) is parallel to the axis of pivoting (Aᵢ) of the reflectors (10ᵢ).

4. The system as claimed in any of one of claims 1 to 3, **characterized in that** each reflector (10ᵢ) of said set is mechanically coupled to a single transmission mechanism (14) with which it is associated.

5. The system as claimed in any one of claims 1 to 4, **characterized in that** the transmission mechanisms (14) are configured in such a way that, on the one hand, the rotation imposed on the offset drive shaft (12) by the actuator (13) causes each transmission mechanism (14) of the plurality to move and, on the other hand, that, at each transmission mechanism (14), the movement of this transmission mechanism causes said at least one reflector (10ᵢ) associated with this transmission mechanism (14) to rotate, solely under the action of this transmission mechanism (14), about the corresponding axis of pivoting (Aᵢ) so as to provide individual rotations of the reflectors (10ᵢ) that are independent of one another and solely under the respective actions of the transmission mechanisms (14) of the plurality.

6. The system as claimed in any one of claims 1 to 5, **characterized in that** the transmission mechanisms (14) of said plurality are staggered along the length of the offset drive shaft (12), and **in that**, for any pair of transmission mechanisms (14) chosen from the plurality, the two transmission mechanisms (14) of said pair are associated with reflectors (10ᵢ) of said set which are distinct from one another.

7. The system as claimed in any one of claims 1 to 6, **characterized in that** the actuator (13) is installed substantially at the middle of the length of the offset drive shaft (12).

8. The system as claimed in any one of claims 1 to 7, **characterized in that**, at each reflector (10ᵢ) of the set, the system comprises a connecting flange (17) pivot mounted about the axis of pivoting (Aᵢ) corresponding to said reflector (10ᵢ) and comprising bearing elements (181, 182) making it possible to accommodate said reflector (10ᵢ) removably, and **in that** each connecting flange (17) is mechanically coupled to one, notably only one, of the transmission mechanisms (14) of said plurality so as to ensure direct application to the connecting flange (17), by the transmission mechanism (14) to which it is mechanically coupled, of the drive torque (CM) that causes the reflector (10ᵢ) accommodated by the connecting flange (17) to rotate.

9. The system as claimed in claim 8, **characterized in that** each transmission mechanism (14) comprises an adjusting device (21) ensuring that the angular positon occupied by the connecting flange (17) associated with said transmission mechanism (14) is adjustable with respect to the angular position of the offset drive shaft (12).

10. The system as claimed in any one of claims 1 to 9, **characterized in that** each transmission mechanism (14) comprises reduction gear (22) providing reduction between the angular speed of the offset drive shaft (12) and the angular speed of the reflector (10ᵢ) associated with said transmission mechanism (14) about the axis of pivoting (Aᵢ), and **in that** the reduction gears (22) of all the transmission mechanisms (14) of said plurality are identical.

11. The system as claimed in any one of claims 1 to 10, **characterized in that** the articulation elements (11) are configured in such a way that two adjacent reflectors (10ᵢ) within the line (L) have angular independence with respect to one another in their respective rotational movements about their corresponding axes of pivoting (Aᵢ).

12. A concentrated solar power plant comprising a set of reflectors (10ᵢ) staggered in a line (L) and concentrating solar radiation, and a system as claimed in any one of claims 1 to 11 for rotating said set of reflectors (10ᵢ).

13. The concentrated solar power plant as claimed in claim 12, **characterized in that** the reflectors (10ᵢ) of said set are of the Fresnel reflector or cylindro-parabolic trough type, providing linear concentration of the incident solar radiation.
